Europäisches Patentamt

(19) European Patent Office

Office européen des brevets

(11) Numéro de publication: **0 090 689**
**B1**

(12) # FASCICULE DE BREVET EUROPEEN

(45) Date de publication du fascicule du brevet:
**29.10.86**

(51) Int. Cl.⁴: **G 01 V 3/10**

(21) Numéro de dépôt: **83400450.9**

(22) Date de dépôt: **04.03.83**

(54) **Procédé et dispositif de détection d'une cible magnétique dans une zone de proximité définie.**

(30) Priorité: **05.03.82 FR 8203694**

(43) Date de publication de la demande:
**05.10.83 Bulletin 83/40**

(45) Mention de la délivrance du brevet:
**29.10.86 Bulletin 86/44**

(84) Etats contractants désignés:
**BE DE GB IT NL SE**

(56) Documents cités:
**DE - A - 2 722 498**
**GB - A - 2 026 169**
**US - A - 3 457 405**
**US - A - 4 059 795**

(73) Titulaire: **PETERCEM S.A., 61, Route de Grenoble**
**B.P. 320, F-69808 Saint Priest-Cédex (FR)**

(72) Inventeur: **Macovschi, Mihaii, 133, Cours Albert Thomas,**
**F-69003 Lyon (FR)**

(74) Mandataire: **Laget, Jean-Loup et ai, Cabinet Pierre**
**Loyer 18, Rue de Mogador, F-75009 Paris (FR)**

## Description

L'invention concerne un procédé et un dispositif de détection d'une cible magnétique dans une zone de proximité définie.

Le problème à résoudre est celui de la détection d'une cible ou pièce magnétique qui se déplace en se rapprochant et qui termine son mouvement d'approche au voisinage d'un capteur de proximité, dans une zone de proximité définie entre une limite extérieure précise et une limite intérieure non définie avec précision. Le cas se présente pour le contrôle de la fermeture correcte de portes par exemple, ou du positionnement de pièces en fin de course sans contact.

Dans chaque cas, la pièce ou cible magnétique qui se rapproche du capteur doit pénétrer dans une zone de proximité en franchissant une limite précise située au voisinage du capteur.

Lorsque la cible est dans cette zone, sa position est considérée comme correcte au regard des impératifs de sécurité. Sa position exacte peut donc varier légèrement entre la limite extérieure précise de la zone de détection et la limite intérieure non définie avec précision qui peut être le capteur lui-même par exemple. Ce qui importe donc essentiellement est de détecter le franchissement de la limite extérieure de la zone de détection au cours d'un mouvement de rapprochement, puisqu'à partir de ce franchissement, la position de la cible est satisfaisante du point de vue de la sécurité.

Le problème est donc différent de celui de la détection de la présence d'une cible dans une zone tel qu'il est envisagé par le document GB-A-2 026 169. Ce document décrit un procédé de détection d'une cible magnétique dans une zone de proximité, au moyen d'un capteur inductif comportant un circuit résonnant LC parallèle, dans lequel on procède à une mesure analogique du déphasage introduit dans le signal d'entrée du circuit LC par l'approche de la cible. Dans ce cas, la résonance du circuit LC parallèle correspondant à l'absence de cible, lorsque la cible approche, le circuit LC est de plus en plus désaccordé et on définit un seuil de valeur du déphasage, dont le franchissement correspond à la présence de la cible.

Le but de l'invention est de proposer une solution simple, sûre et précise, pour la détection du franchissement, par une cible magnétique, d'une limite de zone de proximité définie avec précision.

L'invention a pour objet un dispositif de détection d'une cible magnétique dans une zone de proximité comportant une limite extérieure bien définie, comportant un capteur inductif à circuit résonnant LC, dans lequel l'approche de la cible entraîne une variation du déphasage entre le courant et la tension dans le circuit résonnant, et un oscillateur délivrant un signal de tension à fréquence stable, caractérisé en ce que le circuit résonnant est un circuit série et en ce que le dispositif de détection comporte en outre une carte électronique éloignée du capteur, comprenant l'oscillateur dont le signal est sinusoïdal, d'amplitude constante et dans la gamme des basses fréquences stables, un circuit de pilotage de ligne alimenté par l'oscillateur et alimentant le capteur, un circuit de détection du passage par zéro de la tension alimenté par l'oscillateur, un circuit de détection du passage par zéro du courant alimenté par le circuit de pilotage de ligne, et un circuit comparateur de phase dont la sortie change d'état lorsque le déphasage entre le courant et la tension change de signe, ce qui correspond au franchissement par la cible de la limite extérieure de la zone de proximité.

Selon d'autres caractéristiques de l'invention:
– entre la carte électronique et le capteur est prévue une ligne non blindée, dont la longueur est de plusieurs dizaines de mètres,
– la carte électronique porte en sortie du circuit comparateur de phase un filtre et un circuit de sortie,
– un circuit de traitement logique reçoit les signaux de sortie des deux circuits de détection du passage par zéro de la tension et du courant, et contrôle le circuit de sortie de façon à imposer un état de sortie en cas d'anomalie de l'un des deux signaux.

L'invention a également pour objet un procédé de détection d'une cible magnétique dans une zone de proximité comportant une limite extérieure bien définie, au moyen d'un capteur inductif à circuit résonnant LC, consistant à alimenter ledit circuit résonnant par un signal de tension a fréquence stable à partir d'un oscillateur et à utiliser le déphasage entre le courant et la tension dans le circuit résonnant pour la détection de la position de la cible, caractérisé en ce que l'on utilise comme circuit résonnant un circuit résonnant série dont la résonance intervient lors du franchissement par la cible de la limite de la zone de proximité, en ce que l'on alimente ledit circuit résonnant de telle sorte que le signal de tension soit sinusoïdal, d'amplitude constante et dans la gamme des basses fréquences, et en ce que l'on détecte le changement de signe du déphasage entre le courant et la tension dans le circuit résonnant série lors de ce franchissement.

D'autres caractéristiques ressortent de la description qui suit faite avec référence au dessin annexé sur lequel on peut voir:

Figure 1, un schéma symbolique simplifié d'un dispositif de détection de la proximité d'une cible magnétique selon l'invention;

Figure 2, un schéma simplifié d'un exemple de réalisation particulier du dispositif de détection de la figure 1.

En se reportant au dessin, on peut voir que le dispositif de détection se compose essentiellement d'un capteur de proximité 3 inductif, sans électronique incorporée, et d'une carte électronique associée 11, située à distance du capteur 3 et reliée au capteur par une ligne 12 dont la longueur peut varier dans des limites très larges, entre 1 et 100 m par exemple.

Le capteur 3 comprend essentiellement un circuit résonnant série constitué d'une capacité C et d'une inductance L à armature magnétique 13. R symbolise la résistance propre de la bobine d'inductance L. La cible 7 se présente à une certaine distance de l'armature 13, avant de pénétrer dans la zone de proximité qui est comprise entre la limite extérieure 14 et une limite intérieure non matérialisée sur le dessin et non définie avec précision, mais qui peut être une butée ou le capteur lui-même.

Sur la carte électronique 11, on trouve essentiellement un oscillateur 1, un circuit de pilotage de ligne 2, deux circuits de détection du passage par zéro de la tension et du courant respectivement 4 et 5, et un circuit comparateur de phase 6. On peut prévoir en outre un filtre 8, un circuit de sortie 9, et un circuit de traitement logique 10, par exemple.

Le dispositif de détection fonctionne par détection du changement de signe du déphasage entre le courant et la tension aux bornes d'un circuit oscillant série, accordé pour la valeur de l'inductance qui correspond à la cible 7 dans la position de détection, c'est-à-dire dans la position définie par la limite extérieure 14 de la zone de proximité. Lorsque la cible 7 est au-delà de la limite 14 (cas de la figure), le déphasage courant-tension est dans un sens; lorsque la cible 7 est en deçà de cette limite 14, le déphasage est dans l'autre sens. Le déphasage change de signe lorsque la cible 7 est exactement à la limite 14 de la zone de proximité.

Dans le cadre du problème résolu par l'invention, la sécurité est assurée lorsque la cible 7 se trouve en deçà de la limite 14, quelle que soit sa position exacte dans la zone de proximité.

Le fonctionnement du dispositif s'analyse de la façon suivante en faisant référence au dessin. L'oscillateur 1 envoie des oscillations de tension sinusoïdale de fréquence très stable vers le capteur 3 par l'intermédiaire du circuit de pilotage de ligne 2. L'oscillateur 1 est du type à quartz et la fréquence stable des oscillations est dans la gamme des basses fréquences, par exemple de l'ordre de 1 kHz. La limite supérieure de cette basse fréquence est de l'ordre de 10 kHz. Ces oscillations correspondent à une tension sinusoïdale stable en fréquence et constante en amplitude.

Le circuit de pilotage de ligne alimente le capteur en courant dont le déphasage par rapport à la tension est fonction de la valeur de l'inductance L, c'est-à-dire de la position de la cible 7. Le signe de ce déphasage est déterminé par un circuit 6 comparateur de phase, à partir des signaux fournis par les deux circuits 4 et 5 qui détectent respectivement le passage par zéro dans le sens montant, de la tension et du courant. Le circuit 6 délivre en sortie un signal logique correspondant au signe du déphasage. Ce signal logique passe par un filtre 8 pour diminuer l'influence des parasites, et il est appliqué au circuit de sortie 9 qui délivre à sa borne de sortie un signal utilisable pour une signalisation par voyant lumineux par exemple.

Le circuit de traitement logique 10 met la sortie du circuit 9 dans l'état correspondant à une position de la cible éloignée du capteur, si une anomalie apparaît dans les circuits électroniques. A cet effet, on utilise les signaux rectangulaires de sortie des circuits 4 et 5 de détection du passage par zéro de la tension et du courant, de façon à détecter la disparition de l'un de ces deux signaux.

Ces signaux peuvent être dérivés pour constituer des signaux en dent de scie. On utilise alors chacun de ces signaux en dent de scie pour charger une bascule monostable dont le temps de rebasculement est supérieur à la période des signaux rectangulaires. De cette façon, à chaque période d'un signal rectangulaire, on recharge la bascule monostable correspondante qui ne rebascule pas, son niveau de sortie restant haut. Si l'un des signaux disparaît, la bascule monostable rebascule et son niveau de sortie devient bas. Les sorties des deux bascules monostables sont par exemple appliquées à une porte ET dont la sortie change d'état lorsque l'une des bascules au moins rebascule. Ce changement d'état impose au circuit de sortie 9 l'indication d'une signalisation d'anomalie.

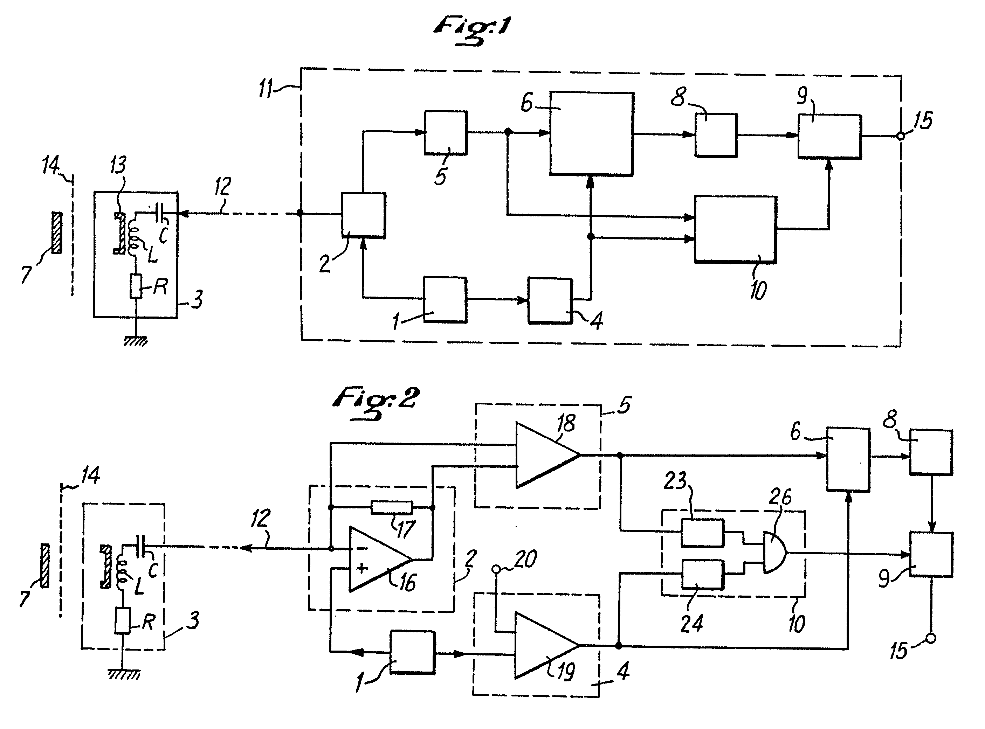

La figure 2 représente un mode de réalisation particulier des circuits essentiels du dispositif, les mêmes références désignant les mêmes éléments.

Le circuit de pilotage de ligne 2 se compose essentiellement d'un amplificateur différentiel 16 dont l'entrée positive est alimentée par l'oscillateur 1 et dont l'entrée négative est alimentée par le signal de sortie de l'amplificateur diffétentiel 16 par l'intermédiaire d'une résistance 17 de contre-réaction. Le capteur 3 est alimenté lui aussi par l'intermédiaire de la résistance 17. Le circuit 5 de détection du passage par zéro du courant est essentiellement un amplificateur différentiel 18 recevant sur une entrée le signal de sortie de l'amplificateur 16 et sur son autre entrée le signal d'alimentation du capteur 3. Le circuit 4 de détection du passage par zéro de la tension est un amplificateur différentiel 19 recevant sur une entrée le signal de l'oscillateur 1 et sur son autre entrée une tension de référence 20 constituée par exemple par la valeur moyenne du signal sinusoïdal de tension, c'est-à-dire le zéro alternatif. Le circuit comparateur de phase 6 peut être par exemple une bascule de type D, recevant sur cette entrée le signal provenant de l'amplificateur 18 et sur son entrée de validation de lecture le signal de sortie de l'amplificateur 19. Les signaux de sortie des deux amplificateurs différentiels 18 et 19 sont appliqués à deux bascules monostables 23 et 24 respectivement dont les sorties sont appliquées à une porte ET 26 qui contrôle l'étage de sortie 9.

L'un des avantages du dispositif selon l'invention est qu'il mesure le signe du déphasage entre le courant et la tension au niveau du capteur 3, lorsque la cible 7 se déplace. Or le changement de signe de ce déphasage se produit très rapidement et avec une grande précision lorsque la cible 7 franchit la limite 14 de la zone de proximité. Comme on utilise un circuit résonnant série LC dans le capteur 3, le signe du déphasage est indépendant de la valeur de la résistance R de la bobine d'induction. Comme sa valeur n'influence pas le signe du déphasage entre le courant et la tension, le dispositif est insensible à tous les paramètres qui peuvent modifier la valeur de la résistance et notamment la température, la longueur de la ligne ou la variation des pertes. On peut ainsi, sans compensation de température, avoir un fonctionnement satisfaisant entre −50° et +125°C par exemple.

En ce qui concerne le capteur, il faut utiliser une capacité de bonne qualité, à céramique à coefficient de température nul ou à diélectrique de type polysulfone, stable dans la gamme de température précitée. Cette capacité peut être placée soit dans le capteur soit dans le circuit de la carte électronique. Si elle est dans le capteur, son encombrement est gênant, mais on peut régler la distance de détection avec précision par la valeur de la capacité. Dans ce cas, les capteurs d'une part, et les cartes électroniques d'autre part, sont parfaitement interchangeables pour la détection à une distance définie. Pour changer la distance de détection, on peut changer la capacité, le réglage précis étant plus facile que par changement de l'inductance. Si elle est sur la carte électronique, on peut utiliser une capacité plus grande et moins chère car le problème d'encombrement ne se pose pratiquement plus. Corrélativement, on dispose de plus de place dans le capteur pour loger une inductance plus grande, et on peut utiliser une fréquence plus faible, inférieure á 2 kHz par exemple. En contrepartie, le réglage de la distance de détection est plus difficile.

Dans tous les cas, le fait d'utiliser un signal d'excitation sinusoïdal réduit fortement les perturbations radio-électriques par les fils de liaison entre capteur 3 et carte électronique 11, la ligne 12 n'étant pas blindée. Enfin, dans un circuit oscillant série, la composante continue dans la ligne et dans l'inductance est nulle.

**Revendications**

1. Dispositif de détection d'une cible magnétique (7) dans une zone de proximité comportant une limite extérieure (14) bien définie, comportant un capteur inductif (3) à circuit résonnant LC, dans lequel l'approche de la cible entraîne une variation du déphasage entre le courant et la tension dans le circuit résonnant, et un oscillateur (1) délivrant un signal de tension à fréquence stable, caractérisé en ce que le circuit résonnant est un circuit série et en ce que le dispositif de détection comporte en outre une carte électronique (11) éloignée du capteur (3), comprenant l'oscillateur (1) dont le signal est sinusoïdal, d'amplitude constante et dans la gamme des basses fréquences, un circuit (2) de pilotage de ligne alimenté par l'oscillateur (1) et alimentant le capteur (3), un circuit (4) de détection du passage par zéro de la tension alimenté par l'oscillateur (1), un circuit (5) de détection du passage par zéro du courant alimenté par le circuit (2) de pilotage de ligne, et un circuit (6) comparateur de phase dont la sortie change d'état lorsque le déphasage entre le courant et la tension change de signe, ce qui correspond au franchissement par la cible (7) de la limite extérieure (14) de la zone de proximité.

2. Dispositif selon la revendication 1, caractérisé en ce que la limite supérieure de la fréquence du signal sinusoïdal d'alimentation du circuit résonnant série est de l'ordre de 10 kHz.

3. Dispositif selon la revendication 1, caractérisé en ce qu'entre la carte électronique (11) et le capteur (3) est prévue une ligne (12) non blindée, dont la longueur est de plusieurs dizaines de mètres.

4. Dispositif selon la revendication 1, caractérisé en ce que la carte électronique porte en sortie du circuit (6) comparateur de phase un filtre (8) et un circuit de sortie (9).

5. Dispositif selon la revendication 4, caractérisé en ce qu'un circuit de traitement logique (10) reçoit les signaux de sortie des deux circuits (4, 5) de détection du passage par zéro de la tension et du courant, et contrôle le circuit (9) de sortie de façon à imposer un état de sortie en cas d'anomalie de l'un des deux signaux.

6. Procédé de détection d'une cible magnétique (7) dans une zone de proximité comportant une limite extérieure (14) bien définie, au moyen d'un capteur inductif (3) à circuit résonnant LC, consistant à alimenter ledit circuit résonnant par un signal de tension à fréquence stable à partir d'un oscillateur (1) et à utiliser le déphasage entre le courant et la tension dans le circuit résonnant pour la détection de la position de la cible, caractérisé en ce que l'on utilise comme circuit résonnant un circuit résonnant série dont la résonance intervient lors du franchissement par la cible (7) de la limite de la zone de proximité (14), en ce que l'on alimente ledit circuit résonnant de telle sorte que le signal de tension soit sinusoïdal, d'amplitude constante et dans la gamme des basses fréquences, et en ce que l'on détecte le changement de signe du déphasage entre le courant et la tension dans le circuit résonnant série lors de ce franchissement.

**Claims**

1. A device for detecting a magnetic target (7) in a proximity zone comprising a well-defined external limit (14) comprising an inductive sensor (3) having a resonant LC circuit in which the approach of the target causes a variation in the phase displacement between the current and the voltage in the resonant circuit, and an osicllator (1) emitting a voltage signal at stable frequency, characterised in that the resonant circuit is a series circuit and in that the detecting device also comprises an electronic board (11) remote from the sensor (3), comprising the oscillator (1) of which the signal is sinusoidal, of constant amplitude and within the low frequency range, a line control circuit (2) supplied by the oscillator (1) and supplying the sensor (3), a circuit (4) for detecting the passage through zero of the voltage supplied by the oscillator (1), a circuit (5) for detecting the passage through zero of the current supplied by the line control circuit (2), and a phase comparing circuit (6) of which the output changes state when phase displacement between the current and the voltage changes sign, signifying that the target (7) has reached the external limit (14) of the proximity zone.

2. A device according to Claim 1, characterised in that the upper limit of the frequency of the sinusoidal signal supplying the series resonant circuit is of the order of 10 kHz.

3. A device according to Claim 1, characterised in that an unscreened line (12) of which the length is several tens of metres is provided between the electronic board (11) and the sensor (3).

4. A device according to Claim 1, characterised in that the electronic board bears at the output of the phase comparing circuit (6) a filter (8) and an output circuit (9).

5. A device according to Claim 4, characterised in that a logic processing circuit (10) receives the output signals from the two circuits (4, 5), which detect the passage through zero of the voltage and the current, and monitors the output circuit (9) so as to impose an output state if there is an anomaly in one of the two signals.

6. A method for detecting a magnetic target (7) in a proximity zone comprising a well-defined external limit (14) by means of an inductive sensor (3) having a resonant LC circuit, involving supplying said resonant circuit with a stable frequency voltage signal from an oscillator (1) and using the phase displacement between the current and the voltage in the resonant circuit for detecting the position of the target, characterised in that a series resonant circuit of which the resonance intervenes when the target (7) has reached the limit of the proximity zone (14) is used as resonant circuit, in that said resonant circuit is supplied in such a way that the voltage signal is sinusoidal, of constant amplitude and within the low frequency range, and in that the change of sign of phase displacement between the current and the voltage in the series resonant circuit when this limit is reached is detected.

**Patentansprüche**

1. Gerät zur Detektion eines magnetischen Stücks (7) in einer eine definierte äussere Grenze (14) aufweisenden Nahzone, mit einem Induktionsmessfühler (3) mit LC-Resonanzkreis, wobei die Annäherung des Stücks eine Änderung der Phasenverschiebung zwischen dem Strom und der Spannung in dem Resonanzkreis verursacht, und mit einem Oszillator (1), der ein frequenzkonstantes Spannungssignal abgibt, dadurch gekennzeichnet, dass der Resonanzkreis als Serienschaltung ausgeführt ist, und dass das Detektionsgerät ausserdem entfernt von dem Messfühler (3) eine gedruckte Schaltung (11) aufweist, die den Oszillator (1) enthält, dessen Signal sinusförmig mit konstanter Amplitude ist und im Niederfrequenzbereich liegt, ferner einen von dem Oszillator (1) gespeisten Leitungssteuerkreis (2), der den Messfühler (3) versorgt, einen Detektionskreis (4) für den Nulldurchgang der von dem Oszillator (1) gelieferten Spannung, einen Detektionskreis (5) für den Nulldurchgang des von dem Leitungssteuerkreis (2) gelieferten Stroms und einen Phasenvergleicherkreis (6), dessen Ausgang einen Zustandswechsel erfährt, wenn die Phasenverschiebung zwischen dem Strom und der Spannung ihr Vorzeichen wechselt, was dem Überschreiten der äusseren Grenze (14) der Nahzone durch das Stück (7) entspricht.

2. Gerät nach Anspruch 1, dadurch gekennzeichnet, dass die obere Frequenzgrenze des sinusförmigen Speisesignals des Serienresonanzkreises bei etwa 10 kHz liegt.

3. Gerät nach Anspruch 1, dadurch gekennzeichnet, dass zwischen der gedruckten Schaltung (11) und dem Messfühler (3) eine unabgeschirmte Leitung (12) verläuft, deren Länge einige zehn Meter beträgt.

4. Gerät nach Anspruch 1, dadurch gekennzeichnet, dass die gedruckte Schaltung am Ausgang des Phasenvergleicherkreises (6) ein Filter (8) und einen Ausgangskreis (9) aufweist.

5. Gerät nach Anspruch 4, dadurch gekennzeichnet, dass eine logische Verknüpfungsschaltung (10) die Ausgangssignale der beiden Kreise (4, 5) zum Erfassen des Nulldurchgangs der Spannung und des Stroms aufnimmt und den Ausgangskreis (9) derart steuert, dass im Falle der Unregelmässigkeit eines der beiden Signale ein Ausgangszustand herbeigeführt wird.

6. Verfahren zur Detektion eines magnetischen Stücks (7) in einer Nahzone mit genau definierter äusserer Grenze (14) mit Hilfe eines Induktionsmessfühlers (3) mit LC-Resonanzkreis, darin bestehend, dass dem genannten Resonanzkreis ein frequenzkonstantes Spannungssignal aus einem Oszillator (1) zugeführt wird, und dass die Phasenverschiebung zwischen dem Strom und der Spannung in dem Resonanzkreis für den Nachweis der Position des Stücks benutzt wird, dadurch gekennzeichnet, dass als Resonanzkreis ein Serienresonanzkreis eingesetzt wird, bei dem Resonanz dann eintritt, wenn das Stück (7) die Grenze (14) der Nahzone überschreitet, dass der Resonanzkreis in der Weise gespeist wird, dass das Spannungssignal sinusförmig ist, konstante Amplitude hat und im Niederfrequenzbereich liegt, und dass der Vorzeichenwechsel der Phasenverschiebung zwischen dem Strom und der Spannung in dem Serienresonanzkreis bei diesem Überschreitungsvorgang festgestellt wird.

Fig.1

Fig.2